(19) Europäisches Patentamt
European Patent Office
Office européen des brevets

(11) **EP 4 530 585 A2**

(12) **EUROPEAN PATENT APPLICATION**

(43) Date of publication:
**02.04.2025 Bulletin 2025/14**

(21) Application number: **25156980.2**

(22) Date of filing: **10.05.2018**

(51) International Patent Classification (IPC):
***G01F 15/00*** *(2006.01)*

(52) Cooperative Patent Classification (CPC):
**F16K 37/0008; F16K 31/003; F16K 31/025;**
**F16K 37/005; G01F 15/005; G01N 11/10;**
**G01P 5/02**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(62) Document number(s) of the earlier application(s) in accordance with Art. 76 EPC:
**18726749.7 / 3 791 097**

(71) Applicant: **Usonia Labs Limited**
**London EC2Y 8DR (GB)**

(72) Inventors:
• **TODOROV, Todor, Stoilov**
**London EC2Y 8DR (GB)**

• **MILKOV, Mihail, Yordanov**
**London EC2Y 8DR (GB)**
• **PENEV, Ivailo, Radoslavov**
**London EC2Y 8DR (GB)**

(74) Representative: **Beck Greener LLP**
**Fulwood House**
**12 Fulwood Place**
**London WC1V 6HR (GB)**

Remarks:
This application was filed on 10-02-2025 as a divisional application to the application mentioned under INID code 62.

(54) **APPARATUS AND METHOD FOR ESTIMATING FLUID PARAMETERS**

(57) The present invention provides a method and apparatus for estimating one or more of the rate of fluid flow, the fluid pressure and the fluid viscosity of a fluid, the apparatus comprising a bistable device configured to be arranged in communication with a fluid; and an accelerometer arranged to detect motion of the bistable device.

Figure 6

## Description

The present invention relates to apparatus and methods for estimating fluid parameters of a fluid. In embodiments, the invention relates to apparatus and methods for estimating one or more fluid parameters including, for example, fluid flow rate, fluid pressure and fluid viscosity.

The invention also relates to actuating a valve using a bistable mechanism. The present invention also relates to a device and a method for measuring one or more of flow rate, fluid pressure and fluid viscosity, and actuating a valve in heating systems and may be deployed to create smart systems for the control of heating in residential and public buildings wirelessly and/or autonomously.

Since a typical bistable device has two stable states, a bistable device can also be used as a valve actuator. The bistable nature of such a valve actuator means that each stable state can correspond to a valve being in its open or closed position and the actuator does not require a continuous power supply to maintain the valve in these positions.

In a known example, a bistable valve actuator is moved between its stable open and closed states by the contracting of SMA elements fixed between the actuator housing and a rocker. To move between the stable states, elastic potential energy is exchanged between a valve spring and a recuperating spring. The recuperating spring is deformed by a lever cam mechanism with an oscillating roller follower coupled to a rocker by a rigid bar. The roller is rolled along the lower surface of the lever, which has two shallow gradients, meeting at a vertex. The SMA wires pivot the rocker in order to move the roller to either side of the vertex of the lever. Once the roller is past the vertex, the exchange of potential energy between the springs moves the actuator into the next stable state. The position of the roller determines the two stable positions. The rocker is connected to a valve stem via a spherical bearing rigidly attached to the rocker and a slider. The interface between the slider and spherical bearing allows the conversion between linear motion of the slider and rotational motion of the rocker.

US 4,973,024 discloses a valve driven by an SMA element. A wire-shaped SMA element is coupled to a valve element that is biased open or closed by a spring. When the SMA element is heated by the application of a current, it contracts to open or close the valve. When the current is removed, the valve returned to its biased open or closed state. Therefore, in order to maintain the valve in the state it is not biased to, current must be supplied to the SMA wire continuously.

US 7,620,932 discloses a fluid control pinch valve activated by SMA elements. SMA elements are heated by electric current and contract to raise a pinching element, which opens the valve. The valve is held open by the continuous supply of current to the SMA elements and closed by the removal of the current. Alternatively, the valve can be held open by a latching component which can hold the pinching element in the raised position without the use of the SMA elements. To close the valve, other SMA elements are heated with a current to disengage the latching component. A magnet may also be used to further raise and hold the pinching element in order to open the valve by a single short pulse of current.

US 6,464,200 discloses an SMA actuated fluid control valve that is biased to a first position by a spring. The contraction of SMA wire sections compresses a spring to move the valve from the biased first position to a second position. The SMA wire sections contract when heated by current; a continuous supply of current is necessary to maintain the valve in the second position. The valve may also include cooling means such as a Peltier cooling device for reducing the temperature surrounding the SMA wire.

These known valve actuation mechanisms require a high amount of energy to operate and in some cases require a constant supply of current to hold the valve open. Thus there is a need for an improved valve actuator.

US 6, 412, 352 discloses a non-invasive method and apparatus to measure the mass flow rate of a multi-phase fluid. An accelerometer is attached to a pipe carrying a multi-phase fluid. An analysis of the signal produced by the accelerometer shows a relationship between the mass flow of a fluid and the noise component of the signal of an accelerometer.

US 2016/0146649 discloses a system for estimating fluid flow in a system including a pump and a fluid vessel operatively coupled to the pump via a conduit. The system comprise an accelerometer affixed to an exterior surface of the conduit, wherein the accelerometer is configured to generate signals representing a physical movements of the conduit, and wherein the signals are suitable for estimating fluid flow in the conduit.

These known methods of determining flow rate use accelerometers to detect movement of a pipe.

Accordingly, a first aspect of the present invention provides apparatus for estimating the rate of fluid flow, fluid pressure and fluid viscosity the apparatus comprising: a bistable device configured to be arranged in communication with a fluid; and an accelerometer arranged to detect motion of the bistable device.

The apparatus for estimating the rate of fluid flow uses a bistable device that has two stable states. The applicant has recognized that during the transition between the stable states, the acceleration of one or more components of the bistable device can be measured. Acceleration measurements allow the determination of effects of external forces on the bistable device.

Indeed, by taking acceleration measurements for a bistable device that is used as an actuator for a fluid control valve, properties of the fluid controlled by the valve, such as any or all of flow rate, fluid pressure and fluid viscosity can be determined. Information about the properties of a fluid can be used to monitor, optimise and/or control the performance of a fluid system, such as a heating system.

In one example, the bistable device is configured so that its motion can be affected by the fluid. In another example, the bistable device is configured to be arranged in direct contact with the fluid. In a further example, the apparatus further comprises one or more force transfer members configured to transfer force between the bistable device and the fluid.

In one example the bistable device is a valve and in another example the bistable device is configured to actuate a valve.

In one example the apparatus further comprises one or more force transfer members configured to transfer force between the bistable device and the valve. In another example the bistable device comprises: a rocker movable between a first stable state and a second stable state; and a resilient member configured to bias the rocker into each of the first and second stable states.

A second aspect of the present invention provides a method estimating one or more of the rate of fluid flow, the fluid pressure and the fluid viscosity of a fluid, the method comprising detecting motion of a bistable device; wherein the bistable device is in communication with a fluid; and wherein motion is detected by an accelerometer. Motion or acceleration of the bistable device, e.g. of components within the bistable device, can be detected by the accelerometer. The detected motion or acceleration of the bistable device or components within the bistable device can be used to determine information relating to the rate of fluid flow, fluid pressure and fluid viscosity.

In one example, the bistable device is configured such that its motion can be affected by the fluid. In another example, the bistable device is configured to be arranged in direct contact with the fluid. In a further example, the method further comprises one or more force transfer members configured to transfer force between the bistable device and the fluid.

In one example the bistable device is a valve and in another example the bistable device is configured to actuate a valve.

In one example the method further comprises one or more force transfer members are configured to transfer force between the bistable device and the valve. In another example the bistable device comprises: a rocker movable between a first stable state and a second stable state; and a resilient member configured to bias the rocker into each of the first and second stable states.

It is to be noted that the estimation of fluid flow of known methods is typically based on vibrations, accelerations or noise of an elastic tubing which is due to non-steady state motion of the fluid. These methods are not applicable for use in estimating parameters associated with steady-state flow and for solid (rigid) tubing which is firmly fixed.

Furthermore, such known methods do not enable or allow estimation of pressure and viscosity of a fluid.

A third aspect of the present invention provides a device for actuating a valve, the device comprising: a plurality of moveable components arranged in a bistable configuration; wherein the plurality of moveable components comprises an articulated member comprising a plurality of segments.

In one example, the device further comprises one or more accelerometers coupled to one or more of the plurality of moveable components and configured to provide a signal indicative of fluid flow.

In one example, the plurality of moveable components are moveable between a first stable state of the bistable configuration and a second stable state of the bistable configuration.

In one example, the plurality of moveable components comprises one or more resilient members. In another example, the one or more resilient members comprises one or more springs.

In one example, the plurality of segments comprises a rocker, an articulated arm and a lever. In another example, the articulated arm and lever are articulated at a fixed point. In a further example, the articulated arm comprises an engagement point and the lever comprises a recess configured to receive the engagement point. In one example, deformation of the one or more resilient members is determined by the configuration of the articulated member.

In one example, the device further comprises one or more smart memory alloy (SMA) elements coupled to the articulated member, wherein each of the one or more SMA elements is actuatable to change between a first shape and a second shape. In another example, the SMA elements are configured such that changing between the first shape and the second shape provides a force for changing the configuration of the articulated member.

In one example, the device is configured to be coupled to a valve.

A fourth aspect of the present invention provides a device for actuating a valve, the device comprising: a rocker movable between a first stable state and a second stable state; an articulated arm with a first end coupled to the rocker and a second end having an engagement point; a lever with a recess, the recess being configured to receive the engagement point of the articulated arm; a spring coupled to and deformable by the lever; one or more shape memory alloy (SMA) elements coupled to the rocker, actuatable to change between a first shape and a second shape; wherein the rocker, articulated arm, lever, and spring are arranged so as to require a predetermined force to move the rocker from one stable state to the other; wherein actuation of one of the one or more SMA elements to change from one of the first shape and the second shape to the other of the first shape and the second shape provides the said predetermined force for actuating a valve between a closed position and an open position.

In embodiments, the rocker moves through an unstable state of equilibrium as it moves from one stable state to the other; and wherein the predetermined force is a force required move the rocker beyond the unstable state of equilibrium.

In embodiments, the rocker, articulated arm, lever, and spring are arranged so as to impose a first predetermined force required to move the rocker from the first stable state to the second stable state and a second predetermined force required to move the rocker from the second stable state to the first stable state.

In embodiments, the device further comprises a chassis, wherein the chassis comprises: a base to which the rocker is pivotally coupled and to which one end of the spring is adjustably coupled; an upper section having one or more adjustable holders to which the respective one or more SMA elements are additionally coupled; and a support section having an anchor point, wherein one end of the lever is pivotally coupled to the anchor point and another end of the lever is coupled to another end of the spring. The one or more adjustable holders may be further arranged to enable adjustment of the tension in the respective one or more SMA elements. Additionally or alternatively, the one end of the spring is adjustably coupled to the base so as to enable adjustment of the tension in the spring. Additionally or alternatively, the base of the chassis further comprises one or more stoppers of adjustable height to constrain the rotational motion of the rocker.

In embodiments, the one or more SMA elements are actuatable to change from one of the first shape and the second shape to the other of the first shape and the second shape in response to applied stress.

In embodiments, the one or more SMA elements are actuatable to change from one of the first shape and the second shape to the other of the first shape and the second shape in response to being heated above a critical temperature. The device may additionally comprise an electric circuit configured to apply current to the one or more SMA elements; wherein the one or more SMA elements are configured to be heated by electrical resistance heating. The device may further comprise a thermoelectric generator configured to power the electric circuit. Additionally, the thermoelectric generator may be configured to supply the electric circuit with electrical energy converted from ambient thermal energy.

In embodiments, the device further comprises a housing at the exterior.

In embodiments, the device further comprises an indicator coupled to the rocker to indicate whether the rocker is in the first stable state or the second stable state.

In one embodiment, the device further comprises a roller rotatably mounted to the rocker and a follower arranged to engage the roller; wherein the roller is arranged to engage the follower so as to transfer movement of the rocker to the follower.

Embodiments of the present invention will now be described in detail with reference to the accompanying drawings, in which:

Figure 1 is a schematic representation of a bistable valve actuator in an open configuration in accordance with an embodiment of the present invention;

Figure 2 is a schematic representation of the bistable valve actuator of Figure 1 in a closed configuration;

Figure 3 is a force-displacement graph showing the variation of the magnitude forces in the bistable mechanism and valve during the closing stroke;

Figure 4 is a force-displacement graph showing the variation of the magnitude forces in the bistable mechanism and valve during the opening stroke;

Figure 5 is a force-displacement graph showing the variation of the forces produced by the SMA elements;

Figure 6 is a schematic representation of a bistable valve actuator in an open configuration showing possible accelerometer configurations;

Figure 7a illustrates a lumped dynamical model for an opening valve an in accordance with an embodiment of the present invention;

Figure 7b illustrates a lumped dynamical model for a closing valve an in accordance with an embodiment of the present invention;

Figure 8 shows graphs of experimental data for a pressure distribution function; and

Figure 9 shows graphs of the distribution of fluid velocity as a function of displacement of a piston.

Generally, the bistable device of the present invention has a first stable state and a second stable state. The bistable device may be a mechanical system comprising moving parts which are at rest in each of the stable states. The transitions between the stable states may be initiated by any action or process that causes at least one primary force to act upon at least part of the bistable device. The transitions between the stable states may be initiated by the primary force and completed by at least one internal secondary force.

For example, a primary force may initiate the release of potential energy, such as gravitational and/or elastic potential energy, and a secondary force may be produced by the release of the potential energy. Elastic potential energy may be stored by the deformation of one or more resilient members, such as a spring. The bistable device may comprise a resilient member which is deformed more in one stable state, such as the first stable state, than the other. In this example, the deformed resilient member may store elastic potential energy in the first stable state and produce a restoring force when at least some of the elastic potential energy is released.

In an example, the shape change of a shape memory alloy (SMA) element under heat may produce an impulse to move the bistable device out of the first stable state. The impulse may cease to act after the first stable state has been exited, but before the second stable state has been entered. The bistable device may then operate to produce further force which causes the bistable device to continue into the second stable state.

Therefore, though a transition from one stable state to the other may be initiated by the application of one or more external forces, the final portion of the transition is driven by one or more internal forces, such as restoring forces and frictional forces. The internally driven part of the transition essentially provides a controllable environment. It is therefore possible to calculate, estimate and/or model the behaviour of the bistable device, at least during the internally driven part of the transition.

The controllable environment enables the influence of external forces, such as forces from a fluid, to be detected and modelled. For instance, such influence may be seen in the acceleration of moveable components of the bistable device. With the detection of external forces, it is possible to estimate parameters associated with the external forces. The bistable device and any interacting external systems may be dynamically modelled in order to determine forces and parameters of an interacting external system and/or the bistable device itself. In the example of external fluid forces, it is possible to estimate fluid flow and pressure, since these parameters contribute directly to the overall force exerted by a fluid on a bistable device.

Acceleration of the bistable device and/or its parts may be produced during the transitions between the stable states as a result of unbalanced internal and/or external forces, including forces from any resilient members, such as springs, forces from the fluid, and general frictional forces. The term "acceleration" is used to refer to the rate of positive and/or negative changes of velocity and therefore the term also encompasses the meaning of "deceleration". By measuring the acceleration, using an accelerometer for example, it is possible to estimate unknown forces and/or other parameters which affect the bistable device. In embodiments, the bistable device and accelerometer may be used with a fluid to enable the estimation of fluid parameters when fluid forces act on the bistable device.

The bistable device may comprise a plurality of components, some of which may be moveable and some of which may be fixed in place. External or internal forces may cause acceleration of the entire bistable device, or of just the moveable components, or of individual components. The acceleration of any number of the components may be measured, for example the acceleration of the entire bistable device, the acceleration of all moveable components, the acceleration of components which are put in motion by one or more specific forces, or the acceleration of specifically chosen components. The acceleration of a component may be measured by affixing an accelerometer to the component. Any number of accelerometers may be affixed to any number of components of the bistable device. For example, an accelerometer may be affixed to every moveable component, or to one or more specifically chosen components.

The bistable device may be set up in communication with a fluid. For example, the fluid may be in a conduit or reservoir. The fluid may be directly in contact with the bistable device, or the fluid may be in contact with one or more additional components, one of which is in contact with the bistable device. With the bistable device in communication with a fluid, the fluid is able to impart force upon the bistable device. If communication with a fluid is via one or more additional components, the additional components may act as force transfer members to transfer force between the fluid and the bistable device.

If the fluid is dynamic, for example flowing through a conduit, then fluid forces can act on the bistable device or one or more force transfer members, causing acceleration in the bistable device. The fluid may also be static, such as in a closed conduit, or changing state from dynamic to static or vice versa. Whether the fluid is dynamic or static, movement of the bistable device or force transfer member in contact with the fluid may also cause one or more fluid forces to act and thus affect acceleration in the bistable device.

Forces which a fluid may exert on the bistable device or force transfer members may include one or more of pressure, drag, buoyancy and lift. Drag is the frictional force that may act on the bistable device or force transfer member as a result of the viscosity of the fluid and the relative flow rate. Therefore, drag may arise if at least one of the fluid and the bistable device or force transfer member is moving relative to the other.

A combination of one or more of the fluid forces may produce an overall damping effect or an overall driving effect on motion of the bistable device and/or force transfer member. A damping effect may generate negative acceleration in the bistable device, and a driving effect may generate positive acceleration in the bistable device. By measuring acceleration of the bistable device, or of one or more components of the bistable device, damping and/or driving effects of the fluid can be detected.

Since the fluid can affect the acceleration, it is possible to estimate one or more parameters of the fluid by measuring acceleration and performing calculations. For instance, if all of the forces apart from the fluid forces acting within and on the bistable device are known or can be calculated or estimated, parameters of the fluid which contribute to the total fluid force can be estimated. Non-limiting examples of fluid parameters which can be estimated are flow rate, pressure, and viscosity.

In one example, the one or more force transfer members which put the bistable device in communication with the fluid in a conduit comprise a fluid control valve. The fluid control valve may be any kind of valve, such as valves used in central heating systems or cooling systems, and the valve may comprise a resilient member operative to bias the valve to a predetermined position, such as to an open or closed position. In a specific example the valve is a needle valve. A needle valve may comprise a valve control needle and a resilient member, such as a valve spring.

In embodiments, the bistable device is in communication with the valve 4, either directly or via one or more force transfer members, and the valve 4 is in communication with a fluid, either directly or via one or more force transfer members. When the valve 4 is open to allow fluid to flow, fluid forces such as pressure, buoyancy, drag and lift act on the valve 4 and/or one or more force transfer members. When the valve 4 is closed to prevent the flow of fluid, forces such as the hydrostatic pressure of the static fluid and buoyancy act on the valve 4 and/or one or more force transfer members. If fluid contacting elements move within the static fluid, further forces such as drag and lift can also act on the fluid contacting elements.

In one example, operation of the bistable device may actuate the valve 4 and, in another example, operation of the valve 4 may actuate the bistable device. Dynamic interaction between the fluid, the valve 4 and the bistable device means that an accelerometer arranged to detect motion of or in the bistable device can detect effects of the fluid on the bistable device.

In an example, the bistable device is a bistable valve and flow rate can be estimated without a separate bistable device. Flow rate can be estimated using readings from an accelerometer arranged to detect acceleration of the valve or part of the valve, such as a valve control needle. When the bistable valve changes from one stable state to the other, the measured acceleration enables the effects of the fluid on the valve to be determined and the flow rate to be estimated.

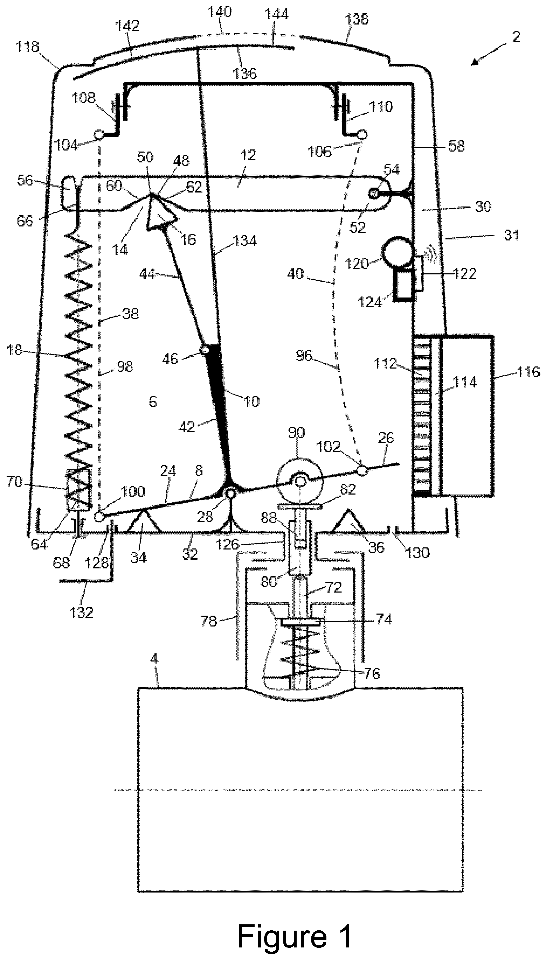

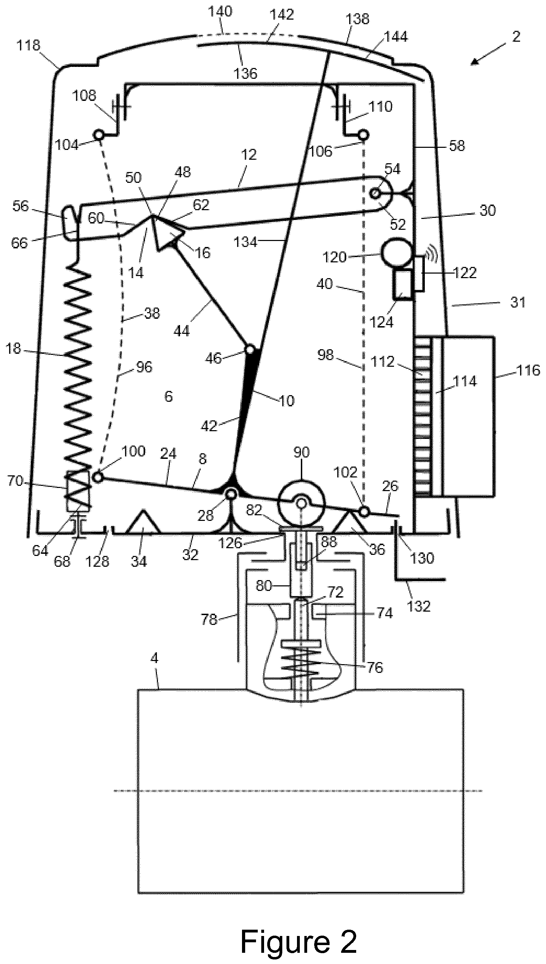

In an embodiment, the bistable device of the present invention is a bistable valve actuator that comprises a bistable mechanism having two stable states and means for moving the bistable mechanism from one stable state to the other. In examples, a bistable valve actuator of an embodiment of the present invention is for any fluid control valve that can be biased to an open or closed state by a resilient member, such as a spring. In an example, the valve is a needle valve for a radiator heating system employing steam or hot water. Referring to Figures 1 and 2, an embodiment of a bistable valve actuator 2 is shown coupled to a valve 4.

In this embodiment, the bistable valve actuator 2 comprises a bistable mechanism 6 formed of a rocker 8, an articulated arm 10 coupled to the rocker 8, a lever 12 with a recess 14 that engages an engagement point 16 of the articulated arm 10, and a recuperating spring 18 coupled to and deformable by the lever 12. The rocker 8 is moveable between a first stable state shown in Figure 1 and a second stable state shown in Figure 2. The first stable state corresponds to an open valve 4 and the second stable state corresponds to a closed valve 4. The movement of the rocker 8 from the first stable state to the second stable state is referred to as the closing stroke and the reverse movement of the rocker 8 is referred to as the opening stroke. One or more shape memory alloy (SMA) elements 38, 40 are provided, which are actuatable to move the rocker 8 out of each stable state. As shown in Figures 1 and 2, the SMA elements 38, 40 are wires. However, it will be appreciated that the SMA elements 38, 40 may be of any other suitable form. The states and strokes of the rocker 8 extend to the position, orientation, and motion of the bistable mechanism 6 and the bistable valve actuator 2 as a whole. Accordingly, hereinafter, description of "states" and "strokes" may refer to the rocker 8, the bistable mechanism 6, or the bistable valve actuator 2.

When assembled, the rocker 8 with the articulated arm 10 coupled thereto co-operates with the lever 12 which is in turn spring-loaded by the recuperating spring 18. The combination of the rocker 8, the articulated arm 10, the lever 12, and the recuperating spring 18 is arranged such that a predetermined amount of force is required to move the rocker from one of the stable states to the other. For example, in embodiments, a predetermined amount of force is required to move the rocker 8 from the stable state shown in Figure 1 to the stable state shown in Figure 2 and vice versa. In some embodiments, the force required to move the rocker 8 from the first stable state to the second stable state is the same as the force required to move the rocker 8 from the second stable state to the first stable state. In some embodiments, the force required to move the rocker 8 from the first stable state to the second stable state and the force required to move the rocker 8 from the second stable state to the first stable state are different.

In an example of the embodiment shown in Figures 1 and 2, the rocker 8 comprises a first arm 24 and a second arm 26 arranged collinearly and coupled at a first revolute joint 28. The rocker 8 is pivotable about the first revolute joint 28, such that the rocker 8 can pivot in a seesaw motion which raises and lowers each rocker arm 24, 26 in turn. In an embodiment, the bistable valve actuator 2 further comprises a chassis 30 with a base 32 to which the rocker 8 is pivotally coupled via the first revolute joint 28. In these embodiments, the chassis 30 is a support structure to which the parts of the bistable valve actuator 2 are coupled. In some embodiments, such as the one shown in Figures 1 and 2, the bistable valve actuator 2 further comprises a housing 31 at its exterior. In some other embodiments, the chassis 30 is the housing 31 in which other components of the bistable valve actuator 2 are contained.

In embodiments, the rotational motion of the rocker 8 in both clockwise and anticlockwise directions about the first revolute joint 28 is constrained by stoppers 34, 36. The stoppers 34, 36 are disposed on the based 32 of the chassis 30 and limit the extent by which each of the arms 24, 26 can pivot downward. These stoppers 34, 36 can be adjustable to a desired height. In some embodiments, the desired height depends on the lengths of the shape memory alloy (SMA) elements, the dimensions of the valve 4 or the length or tension of the recuperating spring 18.

A first portion 42 of the articulated arm 10 is coupled to the rocker 8 such that the pivoting of the rocker 8 causes a second portion 44 of the articulated arm 10 to also pivot. The articulated arm 10 extends generally perpendicularly to the arms 24, 26 of the rocker 8 and is articulated at a second revolute joint 46. In an embodiment, the second revolute joint 46 is positioned around midway along the articulated arm 10. The second revolute joint 46 allows the first portion 42 to pivot within the same pivotal plane as the seesaw motion of the rocker 8. The engagement point 16 is at the end of the second portion 44 of the articulated arm 10.

The lever 12 is also pivotable in the same pivotal plane as the rocker 8 and the articulated arm 10. The lever 12 is positioned generally horizontally above the articulated arm 10 with the recess 14 on the underside so that the engagement point 16 can be received by the recess 14. In one embodiment, the recess 14 is a V-shaped notch 14 and the engagement point 16 has a sharp apex 48. The engagement between the sharp apex 48 and the vertex 50 of the notch 14 keeps the second portion 44 of the articulated arm 10 securely positioned within the notch 14. In some embodiments, the engagement point 16 and recess 14 are replaced by a revolute joint or indeed some other mechanism to enable relative rotational movement of the manner described whilst ensuring continuing engagement between the two. For example instead of a recess on the lever 12 and a point 16 on the second portion 44 of the articulated arm 10, the point could be provided on the underside of the lever to engage with an appropriately shaped end surface of the end of the second portion 44 of the articulated arm 10. Such an arrangement of the lever 12 and articulated arm 10 provides a means for co-operation that contributes to the reduction of the overall frictional forces within the bistable vale actuator 2, thereby contributing to the overall reduction of energy consumption by the bistable valve actuator 2.

One end 52 of the lever 12 is pivotally coupled to an anchor on the chassis 30 such as a third revolute joint 54. The free end 56 of the lever 12 is coupled to one end of the recuperating spring 18. Due to the engagement between the end of the second portion 44 of the articulated arm 10 and the notch 14 of the lever 12, motion of the articulated arm 10 causes the lever 12 to pivot. The motion of the articulated arm 10 raises and lowers its engagement point 16, thus causing the lever 12 to pivot upwards and downwards. In the embodiment of Figures 1 and 2, the notch 14 is positioned along the lever 12 closer to the recuperating spring 18 than the third revolute joint 54 in order to reduce the amount of force required to pivot the lever 12 and the lever 12 is coupled to a support section 58 of the chassis 30 of the bistable valve actuator 2 via the third revolute joint 54. The support section 58 extends from the base 32, generally parallel to the orientation of the SMA elements. In embodiments in which the chassis 30 is the housing 31, the third revolute joint 54 is disposed on a side wall of the housing 31.

The articulated arm 10 is pivoted by the pivotal motion of the rocker 8 as the rocker 8 moves between the first and second stable states. The first portion 42 of the articulated arm 10 pivots with the rocker 8 and the second portion 44 of the articulated arm 10 pivots in the opposite direction to the pivoting rocker 8. This is due to the retention of the engagement point 16 within the notch 14. The depth and inclination of the sides 60, 62 of the notch 14 are chosen so that the engagement point 16 is prevented from exiting the notch 14 when the first portion 42 of the articulated arm 10 pivots. Retention of the engagement point 16 within the notch 14 causes the articulated arm 10 to bend at the second revolute joint 46 and causes the first portion 42 and second portion 44 of the articulated arm 10 to pivot in opposite directions.

For example, during the closing stroke of the rocker 8, the first portion 42 of the articulated arm 10 is rotated clockwise about the pivot point of the rocker 8, away from the notch 14 in the lever 12. The retention of the engagement point 16 within the notch 14 causes the second portion 44 of the articulated arm 10 to rotate anticlockwise about the second revolute joint 46, lowering the height of the engagement point 16. As the engagement point 16 of the articulated arm 10 is lowered, the lever 12 is allowed to pivot downwards.

During the opening stroke of the rocker 8, the first portion 42 of the articulated arm 10 is rotated anticlockwise about the pivot point of the rocker 8, towards the notch 14 in the lever 12. The retention of the engagement point 16 within the notch 14 causes the second portion 44 of the articulated arm 10 to rotate clockwise about the second revolute joint 46 and to push upwards on the notch 14. This upward force on the notch 14 pivots the lever 12 clockwise.

In embodiments, one end 64 of the recuperating spring 18 is held fixed and the other end 66 is coupled to the free end 56 of the lever 12 such that the lever 12 may pivot to deform the recuperating spring 18. In one embodiment, the fixed end 64 of the recuperating spring 18 is coupled to the base of the chassis 30. In the example shown in Figures 1 and 2, the fixed end 64 of the recuperating spring 18 is coupled to the housing 31 via a fourth revolute joint 68 with a vertical rotational axis and an adjusting screw 70. The adjusting screw 70 allows control over the length and tension the recuperating spring 18. In some embodiments, the optimal length and tension of the recuperating spring 18 depends on the dimensions and tensions of the valve 4.

In some embodiments, any of the first, second, third and fourth revolute joints 28, 46, 54 and 68 are implemented as roller bearings, bearing journals, or any other suitable means.

In the embodiment shown in Figures 1 and 2, when the rocker 8 is in the first stable state, the free end 56 of the lever 12 is supported by the articulated arm 10 in its highest position, which causes the recuperating spring 18 to be in an extended state. During the closing stroke, the pivoting of the articulated arm 10 allows the lever 12 to pivot anticlockwise, thus lowering the free end 56 and allowing the recuperating spring 18 to contract. Then, during the opening stroke, the pivoting articulated arm 10 causes the lever 12 to pivot clockwise. The free end 56 of the lever 12 thus rises and extends the recuperating spring 18.

In operation, the bistable valve actuator 2 is configured to actuate a needle valve 4. The needle valve 4 has a valve control needle 72 with a needle flange 74 that is in contact with the top of a valve spring 76. The valve spring 76 supports the valve control needle 72 through its interaction with the needle flange 74. In an example the valve spring 76 biases the valve control needle 72 in the upward, open position. In another example, the valve spring 76 is configured to bias the valve control needle 72 in the downward, closed position. To close the valve 4, the bistable valve actuator 2 pushes the valve control needle 72 downwards so that the needle flange 74 compresses the valve spring 76 from the position in Figure 1 to the position in Figure 2. In embodiments that include a housing 31, the bistable valve actuator 2 is connected to the valve 4 by fastening means such as a fastening nut 78 or any other suitable means.

In embodiments, the bistable valve actuator 2 further comprises a slider 80 and a flat-faced follower 82 for interacting with the valve control needle 72. In operation, the bottom of the slider 80 is placed in contact with the upper end of the valve control needle 72 to enable the slider 80 to push the valve control needle 72 downwards into the valve 4 and the top of the slider 80 is connected to the flat-faced follower 82. In one embodiment, the connection between the slider 80 and the flat-face follower 82 is made via a threaded connection 88 so that the combined length of the slider 80 and flat-faced follower 82 can be adjusted. In some embodiments, the slider 80 and flat-faced follower 82 are replaced by a single component.

In embodiments, a roller 90 is rotatably mounted to an arm of the rocker 8 and is arranged to transfer movement of the rocker 8 to the flat-faced follower 82. The roller 90 is arranged to engage the flat-faced follower 82 and forces the slider 80 and flat-faced follower 82 linearly downwards to close the valve 4. The roller 90 facilitates the conversion between the rotational motion of the rocker 8 and the linear motion of the flat-faced follower 82. The pivoting of the rocker 8 in the closing stroke causes the roller 90 to pivot towards from the valve 4, thereby enabling the roller 90 to apply force to the flat-faced follower 82 and mobilise the flat-faced follower 82 and slider 80.

The roller 90 is able to spin about an axis that is generally perpendicular to the plane of the pivotal motion of the roller 90. Using a roller 90 is an efficient way to engage and push the flat-faced follower 82 as its ability to spin reduces the friction between the roller 90 and the flat-faced follower 82 and thus reduces the energy loss by the kinematic chain. This means that less force is required to pivot the rocker 8 and roller 90 to compress the valve spring 76. The friction between the roller 90 and flat-faced follower 82 is negligible compared to the other forces generated by the bistable valve actuator 2 and the valve 4 and so has a negligible effect on the operation of the bistable valve actuator 2. In some embodiments, the roller 90 is a rolling bearing.

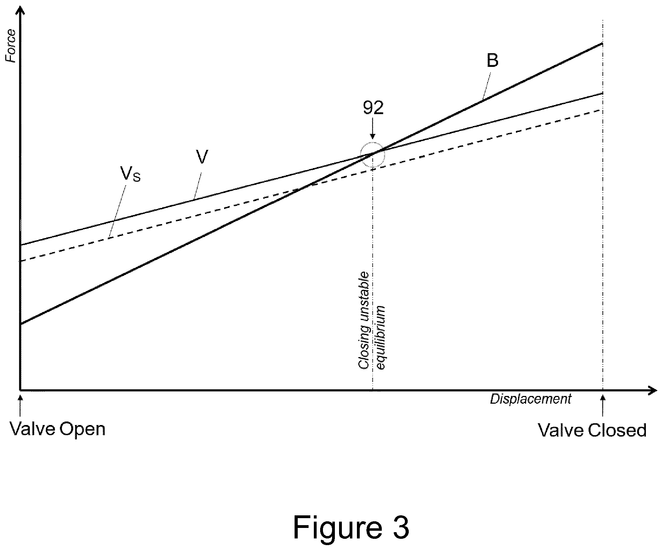

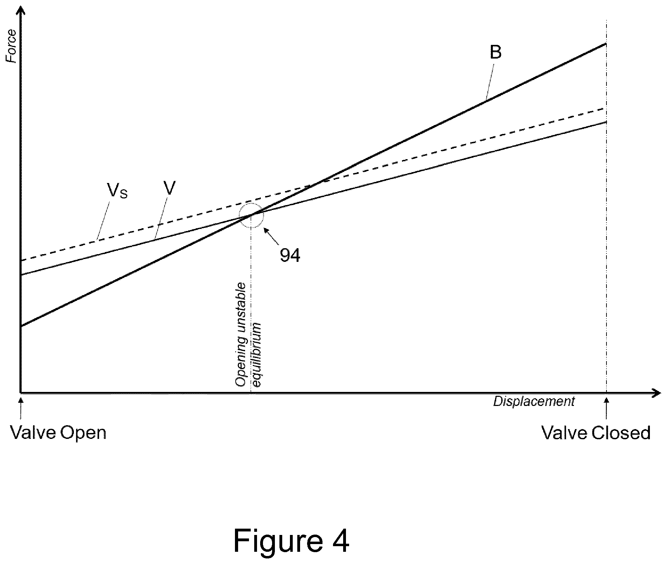

Referring to Figures 3 and 4, force-displacement graphs of the above-described embodiments are shown. The graphs show the variation in the magnitudes of force as the valve control needle 72 is displaced between the valve closed and valve open positions. The forces shown are force B from the bistable mechanism 6, the restoring force Vs of the valve spring 76, and the net force V from the valve 4. The net valve force V is the sum of the upward valve spring restoring force Vs and the constant frictional forces on the valve control needle 72, which act upwardly for the closing stroke and downwardly for the opening stroke. The bistable mechanism force B acts downwardly on the top of the valve control needle 72 and the net valve force V acts upwardly on the bottom of the slider 80 to oppose the bistable mechanism force B.

When the bistable mechanism 6 is in the first stable state, the articulated arm 10 holds the lever 12 in a raised position and thus the recuperating spring 18 is in its most extended state. The size of the downward actuator force applied by the slider 80 on the top of the valve control needle 72 is not greater than the upward net valve force V of the valve 4 in its biased open position, and so the bistable mechanism 6 cannot compress the valve spring 76, which remains in its least compressed state.

When the bistable mechanism 6 is in the second stable state, the lever 12 is in a lower position and the extension of the recuperating spring 18 is reduced to its least extended state. The size of the downward actuator force applied by the slider 80 on the top of the valve control needle 72 is greater than the upward net valve force V of the valve 4 in its biased open position. Therefore, the flange 74 of the valve control needle 72 holds the valve spring 76 in its most compressed state.

"Most", "least", "maximum" and "minimum" are used herein to refer to what is available to the springs within the assembled configuration of the bistable valve actuator 2 undergoing normal operation and not necessarily to what is physically achievable by the springs alone. In some embodiments, the recuperating spring 18 is still under tension when in its least extended state and/or the valve spring 76 is still under pressure when in its least compressed state. The maximum extension of the recuperating spring 18 and compression of the valve spring 76 are limited by the range of pivotal motion of the rocker 8, which is constrained by the height of the stoppers 34, 36. The height of the stoppers 34, 36 also determines the position of bistable mechanism 6 in each stable state.

When the bistable valve actuator 2 is assembled into the first stable position shown in Figure 1, elastic potential energy is stored in the bistable mechanism 6 by the extension of the recuperating spring 18. The closing stroke of the bistable mechanism 6 causes the lever 12 to pivot downwards to reduce the extension of the recuperating spring 18 and causes the valve control needle 72 to move downwards to compress the valve spring 76 with the needle flange 74. Therefore, in closing the valve 4, the stored elastic potential energy of the recuperating spring 18 is transferred to and stored in the compressed valve spring 76. The transfer of energy between the springs is facilitated by a kinematic chain comprising the lever 12, articulated arm 10, rocker 8, roller 90, flat-faced follower 82, slider 80 and valve control needle 72.

Similarly, the opening stroke of the bistable mechanism 6 reduces the compression of the valve spring 76 and increases the extension of the recuperating spring 18, thereby recuperating the elastic potential energy lost by the valve spring 76 by storing in the recuperating spring 18. The recuperation of the elastic potential energy in the releasing of the valve spring 76 allows the energy consumption of the valve actuation to be reduced.

During the closing stroke, the valve control needle 72 moves downwards and so the frictional forces on the valve control needle 72 act upwardly in the same direction as the valve spring restoring force Vs. The upward net valve force V is therefore greater than the valve spring restoring force Vs. On the other hand, during the opening stroke, the valve control needle 72 moves upwards and so the frictional forces act downwardly in the opposite direction to the valve spring restoring force Vs. The upward net valve force V is therefore less than the valve spring restoring force Vs.

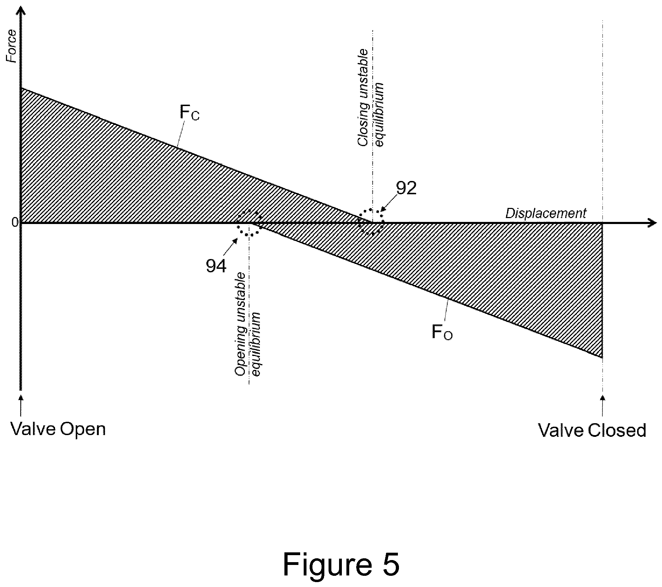

In the stable states, the net force in the bistable valve actuator 2 is zero. The stable states occur when one rocker arm 24, 26 is in contact with a stopper 34, 36. The stopper provides the reaction force to balance out the forces of the bistable mechanism 6 and valve 4. In order to move the bistable mechanism 6 between the stable states, work must be done to produce imbalanced forces at the interface between the slider 80 and the valve control needle 72. This work may be done by shape memory alloy (SMA) elements such as the SMA wires shown in Figures 1 and 2. In examples of the embodiment of Figures 1 and 2, the SMA elements 38, 40 are configurable to reshape and are therefore able to provide kinetic energy to produce a force to move the bistable mechanism 6 out of the stable states. In some embodiments, the SMA elements 38, 40, are configured to reshape when heat is applied thereto. The graph in Figure 5 shows the change in magnitude of the forces $F_C$, $F_O$ that are applied to the bistable mechanism 6 by the SMA elements 38, 40 as the valve control needle 72 is displaced during the opening and closing strokes. Figure 5 also shows the direction of the SMA forces $F_C$, $F_O$ applied to the valve control needle 72 at the slider 80. The area underneath the graph shows the potential energy of the springs that has to be overcome by the SMA wires 38, 40.

By coupling the SMA elements 38, 40 to the rocker arms 24, 26, the reshaping of the SMA elements 38, 40 applies a force $F_C$, $F_O$ to each rocker arm. The SMA elements 38, 40 are configured to apply forces $F_C$, $F_O$ large enough to cause the rocker 8 to pivot out of its stable state. SMA element 38 is configured to apply a force $F_C$ to the first arm 24 of the rocker 8 and SMA element 40 is configured to apply a force $F_O$ to the second arm 26 of the rocker 8. The application of SMA forces $F_O$ and $F_C$ alternate in order to pivot the rocker 8 from side to side. SMA force $F_C$ corresponds to the closing stroke and SMA force $F_O$ corresponds to the opening stroke.

To begin the closing stroke, the SMA element 38 applies a force $F_C$ to pivot the rocker 8 clockwise. Thus, a downward net actuator force comprising the SMA force $F_C$ and the bistable mechanism force B is applied to the valve control needle 72. The bistable mechanism force B is generated by the release of elastic potential energy through the kinematic chain as the extension of the recuperating spring 18 decreases.

For the closing stroke, the size of the downward net actuator force is greater than the upward net valve force V, but the downward bistable mechanism force B is initially less than the upward net valve force V. As the unbalanced forces compress the valve spring 76, the valve spring restoring force Vs increases, which increases the net valve force V. As the rocker 8 is pivoted by the SMA element 38, the bistable mechanism force B is also increased as more elastic potential energy is released by the recuperating spring 18 through the kinematic chain to the valve spring 76. However, the rate of the increase in the bistable mechanism force B is higher than that of the increase in the net valve force V. This eventually leads to the downward bistable mechanism force B being greater than the upward net valve force V. As soon as this happens, the external force $F_C$ from the SMA element 38 is no longer necessary and the release of elastic potential energy from the recuperating spring 18 alone is enough to drive the bistable mechanism 6 the rest of the way into the second stable state.

However, before the bistable mechanism force B becomes greater than the net valve force V, a state of equality 92 exists between these two opposing forces. The valve 4 and bistable mechanism 6 cannot rest in this state of zero net force. This is the closing unstable equilibrium point 92 separating the two stable states. In an embodiment, the dimensions of the bistable valve actuator 2 components are chosen such that the closing unstable equilibrium point 92 occurs around the middle of the stroke.

If the application of force $F_C$ to the rocker 8 by the SMA element 38 were to cease before the closing unstable equilibrium point 92 were reached, the bistable mechanism 6 would return to its original stable state. However, once the bistable mechanism 6 has moved just past the closing unstable equilibrium point 92, the force from the SMA element 38 is no longer required to complete the closing stroke and the bistable mechanism 6 moves into the next stable state with no external application of force. Therefore, the SMA element 38 need only apply force for around half of the stroke, which demonstrates the reduction of energy consumption by the bistable valve actuator 2 through the recuperation of elastic potential energy.

A similar process occurs for the opening stroke of the bistable valve actuator 2. However a key difference lies in the direction of the frictional forces on the valve control needle 72. The change in the direction of the frictional forces for the closing and opening strokes means that the closing unstable equilibrium point 92 does not coincide with the opening unstable equilibrium point 94. Instead, the unstable equilibrium points 92, 94 occur for different positions of the valve control needle 72 and for different forces in the recuperating spring 18 and valve 4.

To begin the opening stroke, the SMA element 40 applies a force to pivot the rocker 8 anticlockwise. Thus, the downward net actuator force comprising the SMA force $F_O$ and the bistable mechanism force B is applied to the valve control needle 72. The SMA force $F_O$ opposes the bistable mechanism force B and thus the downward net actuator force is less than the bistable mechanism force B.

For the opening stroke, the size of the downward net actuator force is less than the upward net valve force V, but the downward bistable mechanism force B is initially greater than the upward net valve force V. As the unbalanced forces allow the valve spring 76 to decompress, the valve spring restoring force Vs decreases as the valve spring 76 releases the elastic potential energy that had been transferred to it during the closing stroke; this decreases the net valve force V. As the rocker 8 is pivoted by the SMA element 40, the bistable mechanism force B is also decreased as the recuperating spring 18 is extended to store more elastic potential energy transferred through the kinematic chain from the valve spring 76. However, the rate of the decrease in the bistable mechanism force B is higher than that of the decrease in the net valve force V. This eventually leads to the downward bistable mechanism force B being less than the upward net valve force V. As soon as this happens, the external force $F_O$ from the SMA element 40 is no longer necessary and the release of elastic potential energy from the valve spring 76 alone is enough to drive the bistable mechanism 6 the rest of the way into the first stable state.

However, before the bistable mechanism force B becomes less than the net valve force V, a state of equality 94 against exists between these two opposing forces. The opening unstable equilibrium point 94 also occurs around the middle of the stroke, but not at the same point as the unstable equilibrium point 92 for the closing stroke.

If the application of force $F_O$ to the rocker 8 by the SMA element 40 were to cease before the opening unstable equilibrium point 94 were reached, the bistable mechanism 6 would return to its original stable state. However, once the bistable mechanism 6 has moved just past the closing unstable equilibrium point 94, the force from the SMA element 40 is no longer required to complete the closing stroke and the bistable mechanism 6 moves into the next stable state with no external application of force. Therefore, the SMA element 40 need only apply force for around half of the stroke, which demonstrates the reduction of energy consumption by the bistable valve actuator 2 through the recuperation of elastic potential energy.

A shape memory alloy (SMA) is an alloy, such as copper-aluminium-nickel alloys or nickel-titanium alloys for example, that is able to be trained under high temperatures to remember a certain shape. After being deformed, the alloy will return to the remembered shape when heated above a critical temperature. In the above-described embodiments, SMA elements 38, 40 with remembered shapes are thus able to be deformed below the critical temperature into different shapes and then, by applying heat to the wire, be made to return to their remembered shapes. The temperatures necessary for training, deforming and resetting the shapes of SMAs depend on the properties of the specific alloys used. Typically for nickel-titanium alloys, the temperature for thermal training is at approximately 500°C and the critical temperature is approximately 70°C

The temperature of an SMA wire 38, 40 can be increased through electrical resistance heating. When a current is passed through a conductor, the resistance of the conductor causes some of the electrical energy to be converted into heat energy. The amount of heat produced in a wire is proportional to the resistance of the wire multiplied by the square of the current. For SMA wires formed from nickel-titanium alloys, for example, a small diameter such as 0.1 mm is preferable in order to decrease the heating and cooling time. In a particular example, an SMA wire is formed from two wires in parallel, each of 15Ω resistance, providing a total resistance of 7.5Ω. In this particular example, the supplied voltage is 3V and the total current is 0.4A.

In embodiments, SMA wires 38, 40 extend vertically between the bistable mechanism 6 and the chassis 30 of the bistable valve actuator 2. The SMA wires 38, 40 are coupled by their lower ends 100, 102 to the rocker 8, at or near to the ends of the rocker arms 24, 26, and by their upper ends 104, 106 to an upper section of the chassis 30. In an embodiment, the upper ends 104, 106 of the SMA wires 38, 40 are fixed to adjustable holders 108, 110 on the chassis 30. The adjustable holders 108, 110 are each configured to allow adjustment of the tension, length, and/or shapes of the SMA wires 38, 40, but maintain the upper ends 104, 106 of the SMA wires 38, 40 at the same height during the normal operation of the bistable valve actuator 2. In the embodiment shown in Figures 1 and 2, each rocker arm 24, 26 is coupled to a single SMA wire 38, 40. However any number of SMA wires 38, 40 may be coupled to the rocker arms 24, 26 at any location along the arms 24, 26.

Each SMA wire 38, 40 has a contracted first shape 96 and an extended second shape 98. In the contracted first shape 96, the lower ends 100, 102 and upper ends 104, 106 of the SMA wires 38, 40 are closer than in the extended second shape. The SMA wires 38, 40 are trained to remember the first shape 96 and can be deformed under tensile stress from the first shape 96 into the second shape 98. For example, an SMA wire 38, 40 in the first shape 96 can have one end held in a fixed position and the other end pulled so that the SMA wire 38, 40 extends to the second shape 98. The SMA wire 38, 40 can then be heated, for example by electrical resistance heating, until it contracts into the first shape 96.

The SMA wires 38, 40 are enabled to cause the rocker 8 to pivot between the first stable state and the second stable state by oppositely alternating between their first shapes 96 and second shapes 98 to apply force $F_C$, $F_O$ to the rocker 8. The bistable valve actuator 2 may be firstly assembled with the bistable mechanism 6 in either of the stable states. When the bistable mechanism 6 is assembled in the first stable state, the first arm 24 of the rocker 8 is in its lowest position and the second arm 26 of the rocker 8 is in its highest position. The upper end 104, 106 of each SMA wire 38, 40 is held fixed in place by an adjustable holder 108, 110 and the lower end 104, 106 of each SMA wire 38, 40 is coupled to an arm of the rocker 8. The first SMA wire 38 is therefore required to have been deformed into the second shape 98 and the second SMA wire 40 is required to be in the first shape 96.

A current applied to the first SMA wire 38 that is in the second shape 98 causes electrical resistance heating of the first SMA wire 38 to above the SMA critical temperature. Consequently, the first SMA wire 38 changes from the second shape 98 into the first shape 96. As the first SMA wire 38 changes shape, its lower end 100 moves upwards and closer to the upper end 104 that is held fixed. The lower end 100 of the first SMA wire 38 is coupled to the first arm 24 of the rocker 8 and so the first arm 24 of the rocker 8 also moves upwards, causing the rocker 8 to pivot clockwise for the closing stroke. This pivoting of the rocker 8 results in the second arm 26 moving downwards and pulling the lower end 102 of the second SMA wire 40 downwards as well, since they are coupled together. As the upper end 106 of the second SMA wire 40 is held fixed in place, pulling the lower end 102 of the second SMA wire 40 downwards causes it to extend and so the second SMA wire 40 is deformed from the first shape 96 into the second shape 98. Once the first SMA wire 38 has applied enough force $F_C$ to the rocker 8 for the rocker 8 to pivot through around half of the closing stroke to just past the unstable equilibrium point 92, no more current needs to be supplied to the first SMA wire 38. The remainder of the stroke is carried out by the imbalanced bistable mechanism and valve forces B, V. The bistable mechanism 6 is thus moved from the first stable state into the second stable state for actuating the valve 4 from an open position to a closed position.

To move the bistable mechanism 6 from the second stable state into the first stable state for actuating the valve 4 from a closed position to an open position, a current is applied to the second SMA wire 40 that is in the second shape 98. The current causes electrical resistance heating of the second SMA wire 40 to above the SMA critical temperature and, consequently, the second SMA wire 40 changes from the second shape 98 into the first shape 96. As the second SMA wire 40 changes shape, its lower end 102 moves upwards and closer to the upper end 106 that is held fixed. The lower end 102 of the second SMA wire 40 is coupled to the second arm 26 of the rocker 8 and so the second arm 26 of the rocker 8 also moves upwards, compelling the rocker 8 to pivot anticlockwise. This pivoting of the rocker 8 results in the first arm 24 moving downwards and pulling the lower end 100 of the first SMA wire 38 downwards as well, since they are coupled together. As the upper end 104 of the first SMA wire 38 is held fixed in place, pulling the lower end 100 of the first SMA wire 38 downwards causes it to extend and so the first SMA wire 38 is deformed from the first shape 96 into the second shape 98. Again, after about half the stroke, no more current needs to be supplied to the SMA wire 38, 40 for the bistable mechanism 6 to move into the second stable state and actuate the valve 4 from an open position to a closed position.

As will be appreciated by the skilled person, the nomenclature above for the first shape 96 and the second shape 98 is used to distinguish between two different shapes and may be interchanged.

In examples of the embodiment illustrated in Figures 1 and 2, electric current is supplied to the SMA wires 38, 40 by an electric circuit powered by a thermoelectric generator 112, such as a Peltier device. A thermoelectric generator 112 converts thermal energy into electrical energy. The thermoelectric generator 112 is coupled to the bistable valve actuator 2 and uses ambient heat as its source of thermal energy.

The reduced energy consumption of the bistable valve actuator 2 due to the potential energy recuperation means that the bistable valve actuator 2 can operate through the autonomous supply of power by the thermoelectric generator 112. If there were no recuperation of elastic potential energy, the reshaping of the SMA wires 38, 40 would have to carry out the full opening and closing strokes of the bistable mechanism 6. A thermoelectric generator 112 would be unable to autonomously supply enough current to the SMA wires 38, 40 to operate the full strokes. In some examples, a three-fold reduction in the energy required can be achieved.

In embodiments, the thermoelectric generator 112 is rigidly mounted to the chassis 30 with the cool side 114 in contact with a heat sink 116. In embodiments with a housing 31, an opening in the housing 31 is provided through which the thermoelectric generator 112 extends and the interior of the housing 31 is insulated by a lid 118 which keeps the heat sink 116 on the outside. If the bistable valve actuator 2 is used for a heating device such as a radiator, the thermoelectric generator 112 will be able to convert thermal energy supplied by the radiator into electrical energy to power the circuit.

The circuit also includes a supercapacitor 120 for storing electrical energy produced by the thermoelectric generator 112, a transmitter 122, a temperature sensor and a microprocessor 124 for controlling the functions of the circuit, such as supplying current to the SMA wires 38, 40. The transmitter 122 allows wireless remote control of the circuit and therefore of the bistable valve actuator 2.

In some embodiments, the housing 31 of the bistable valve actuator 2 has a main opening 126 in its base 32 through which the flat-faced follower 82 and slider 80 pass to engage the valve control needle 72. A first hole 128 and a second hole 130 are also present underneath the ends of the rocker arms 24, 26 to allow the insertion of an L-shaped tool 132. The L-shaped tool 132 can be used to manually pivot the rocker arms 24, 26 without the need for SMA elements 38, 40 or electric power to reshape the SMA elements 38, 40, for example in the case of a fault with the circuit or a lack of electrical supply.

The top and side of the housing 31 is enclosed by a lid 118 to provide thermal insulation and also to provide a user with an indication of which stable state the bistable mechanism 6 is in and thus whether the valve 4 is open or closed. A bar 134 is rigidly coupled by its lower end to the bistable mechanism 6 through the articulated arm 10 so that the bar pivots with the rocker 8. The upper end of the bar 134 is coupled to an arc plate 136 which extends below and parallel to the upper surface 138 of the housing 31. A window 140 is provided in the upper surface 138 of the housing 31, so that a first portion 142 of the arc plate 136 can be seen through the window 140 when the bistable mechanism 6 is in the first stable state and a second portion 144 of the arc plate 136 can be seen through the window 140 when the bistable mechanism 6 has been pivoted to the second stable state.

By differing the appearances of the first and second portions 142, 144 of the arc plate 136, for example through colour, a user is able to be informed of which state the bistable valve actuator 2 is in by looking through the window 140 in the housing 31. In an embodiment, the first portion 142 of the arc plate 136 is green in colour and the second portion 144 of the arc plate 136 is red in colour. Therefore, when the bistable mechanism 6 is in the first stable state the user will be able to see the green portion of the arc plate 136 through the window 140 and know that the valve 4 is open. Then when the bistable mechanism 6 is in the second stable state the user will be able to see the red portion of the arc plate 136 through the window 140 and know that the valve 4 is closed.

In embodiments, the bistable valve actuator 2 may be used as a flow meter (pressure sensor and viscosity meter) to determine the flow rate of fluid that is controllable by the valve 4. A valve 4, such as that shown in Figures 1 and 2, comprises one or more fluid contacting elements for example the valve control needle 72, that are in contact with a fluid in a conduit of a fluid flow system, for example in a pipe of a central heating system.

The valve control needle 72 is in kinematic communication with moveable components of the bistable valve actuator 2. The valve control needle 72 of Figures 1 and 2 is part of a kinematic chain comprising the lever 12, articulated arm 10, rocker 8, roller 90, flat-faced follower 82 and slider 80 of the bistable valve actuator 2. Forces acting on the fluid contacting elements generate forces on the moveable components of the bistable valve actuator 2.

Forces acting on the valve control needle 72 may be passed through the kinematic chain such that each element of the chain is subject to force from the fluid. Unless the forces on and within the bistable valve actuator 2 are balanced, the bistable valve actuator 2 will experience acceleration in one or more of its moveable components.

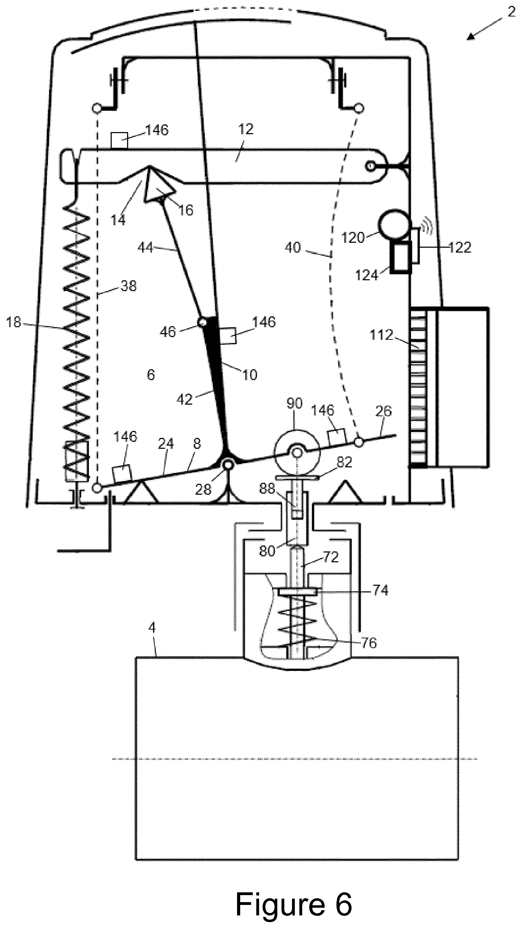

The acceleration can be detected by one or more accelerometers 146 (see for example Figure 6). Each of the one or more accelerometers 146 may be in the form of an accelerometer chip with an integrated or separate microprocessor. The accelerometer chip may interface with the microprocessor 124 of the bistable valve actuator 2. The one or more accelerometers 146 may be affixed to any component of the bistable valve actuator 2 that moves during operation.

Figure 6 demonstrates non-limiting examples of positions for accelerometers 146. A single accelerometer 146 may be placed at or near any of the illustrated locations, or a plurality of accelerometers 146 may be placed at or near any number of the illustrated locations. In the examples shown in Figure 6, one or more accelerometers may be affixed to the rocker 8, articulated arm 10, or lever 12. One or more accelerometers may also be affixed to, for example, the slider 80, flat-faced follower 82, or valve control needle 72. Using one or more of these exemplary configurations, or any other suitable configuration, one or more accelerometers 146 may detect the fluid response from the valve control needle 72 as the bistable valve actuator 2 transitions between stable states.

Once the SMA elements 38, 40 have moved the bistable mechanism 6 through the unstable equilibrium points 92, 94, the bistable mechanism 6 completes the transition between stables states using the restoring force from the recuperating spring 18. By measuring the acceleration of one or more components of the bistable mechanism 6, the bistable actuator 2 and valve 4 can be dynamically modelled and the flow rate and pressure of the fluid can be estimated.

An example of a method for flow rate estimation using an accelerometer will now be described using dynamic modelling with parabolic velocity distribution and linear pressure approximation and a least squares method for system identification. The following example is applied to the bistable device as a valve actuator 2 in use with a valve 4. The bistable valve actuator 2 comprises a spring 18 and the valve comprises a spring 76.

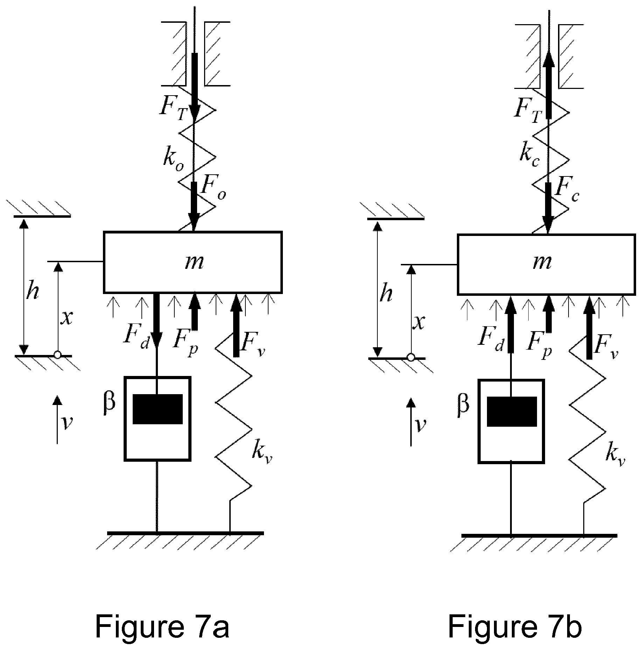

Figure 7a is a lumped dynamic model of the closing stroke of a bistable valve actuator 2. Figure 7b is a lumped dynamic model of the opening stroke of a bistable valve actuator 2. The models describe the forces which contribute to the motion in the kinematic chain of components in the bistable valve actuator 2 and the valve control needle 72 for the closing and opening strokes.

The mass of all links in the kinematic chain is represented schematically by lumped mass m according to the equality of the kinetic energy of the valve 4 and valve actuator 2 and the kinetic energy of the lumped mass m. In the general case, the mass m is not constant and depends on the position $x$ of the valve control needle 72. However, here, the lumped dynamic model assumes the mass m to be constant because the variation of the valve control needle position $x$ is small. During the opening stroke, the positon $x$ of the mass m varies from 0 to $h$. During the closing stroke, the position $x$ of the mass m varies from $h$ to 0.

The forces that act on the mass during the opening stroke are as follows: opening spring force $F_o$; damping force $F_d$; valve spring force $F_v$; pressure force $F_p$; and friction force $F_T$. In the context of previously described embodiments the opening spring force is the restoring force of the recuperating spring 18 as the bistable valve actuator 2 opens the valve 4, and the valve spring force is the restoring force of the valve spring 76. The damping force opposes the motion of the valve control needle 72 as a result of viscosity of the fluid. The pressure force is due to the pressure of the fluid on the valve control needle 72. The friction force arises from friction associated with all motion within the bistable valve actuator 2 and the valve 4.

During the closing stroke, the closing spring force $F_c$ replaces the opening spring force $F_o$ and the directions of the damping force $F_d$ and the friction force $F_T$ reverse, but the valve spring force $F_v$ and the pressure force $F_p$ act in the same direction as in the opening stroke. The temperature of the fluid is assumed to be constant.

According to Newton's second law of motion, the model for the opening stroke is represented by the differential equation

$$m\ddot{x} = -F_o - F_d + F_v - F_T + F_p \qquad (1)$$

in which

$$F_o = F_{op0} + k_o x \qquad (2)$$

where $k_o$ is the open spring stiffness and $F_{op0}$ is the initial opening spring force,

$$F_d = \beta(\dot{x} + v) \qquad (3)$$

where $\beta$ is the viscous coefficient and $v$ is the velocity of the fluid,

$$F_v = F_{v0} + k_v x \qquad (4)$$

where $k_v$ is the valve spring stiffness and $F_{v0}$ is the initial force of the valve spring, and

$$F_p = Ap(x) \qquad (5)$$

where p(x) is the pressure distribution function, and $A$ is the area of the piston of valve control needle 72. The derivative with respect to the time is denoted with dots.

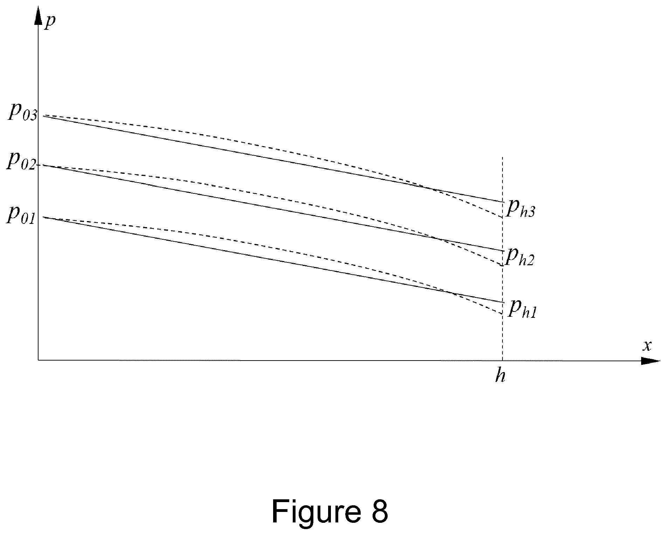

The pressure of the fluid is investigated experimentally. Experimental data for the pressure function is shown by the pressure vs. displacement graphs in Figure 8, in which $p_{01}$, $p_{02}$ and $p_{03}$ are static pressures for the closed valve and $p_{h1}$, $p_{h2}$ and $p_{h3}$ are static pressures for the open valve. The experimental data is represented in Figure 8 by solid lines and corresponding linear approximations are represented by dashed lines.

For the general case the pressure function is approximated as

$$p(x) = p_0 + k_p x \qquad (6)$$

in which $p_0$ is the static pressure in the valve when the valve is closed, and the constant $k_p$ is approximated as

$$k_p = \frac{p_0 - p_h}{h}$$

$$(7)$$

where $p_h$ is the static pressure in the valve when the valve is open.

On the basis of experimental investigations it is assumed that the velocity of the fluid has a parabolic distribution with respect to the piston position. This distribution is presented in the form

$$v(x) = ax^2 \qquad (8)$$

where a is the fluid velocity coefficient.

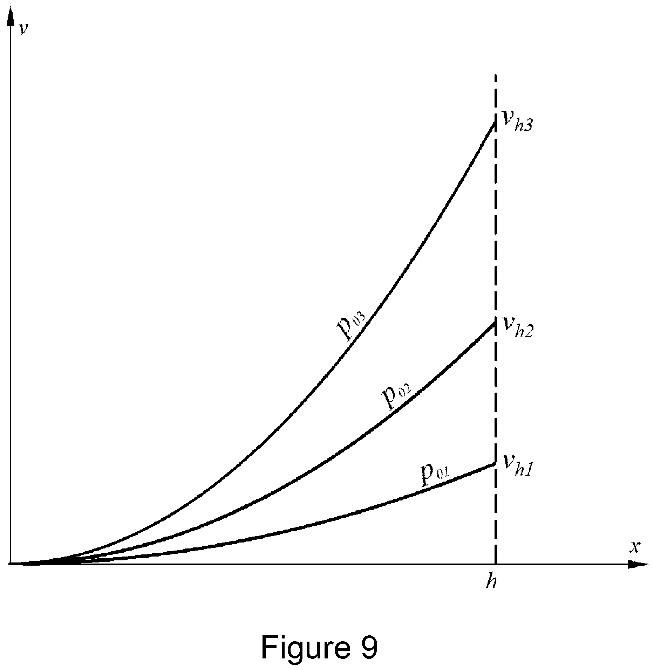

The fluid velocity distribution for three different static pressures, pressures $p_{01}$, $p_{02}$ and $p_{03}$ is shown in Figure 9 where $v_{h1}$, $v_{h2}$ and $v_{h3}$ are the fluid velocities at the end of the displacement of the piston corresponding to stroke $h$. These are the velocities for the open position of the valve and depend on the pressure, the stroke, and the temperature of the fluid.

Substituting the above expressions in equation 1 yields

$$m\ddot{x} + \beta(\dot{x} + ax^2) + (k_0 - k_v - Ak_p)x - F_{v0} + F_{op0} + F_T - Ap_0 = 0 \qquad (9)$$

Dividing by mass m, the dynamic model can be rewritten as

$$\ddot{x} + \eta\dot{x} + \eta ax^2 + \omega_o^2 x + \phi_o = 0 \qquad (10)$$

in which

$$\omega_o^2 = \frac{k_o - k_v - Ak_p}{m}$$

$$(11)$$

where $\omega_0$ is the natural frequency,

$$\eta = \frac{\beta}{m}$$

$$(12)$$

is the damping coefficient, and

$$\phi_o = \frac{F_{op0} - F_{v0} + F_T - Ap_0}{m}$$

$$(13)$$

in which $\phi_o$ represents the ratio of total constant force ($F_{op0}$ - $F_{v0}$ + $F_T$ - $Ap_0$) and mass (m).

The initial conditions of this differential equation for t = 0 are x(0) = 0 and $\dot{x}$(0) = 0 because the piston starts from a stationary state.

For the closing stroke, the closing spring force is

$$F_c = F_{c0} + k_c x \qquad (14)$$

the friction force $F_T$ reverses its direction as compared to the opening stroke and the damping force changes to

$$F_d = \beta(\dot{x} - v) \qquad (15)$$

Taking in to account the above forces, the differential equation for the motion of the lumped mass through the closing stroke is formulated as

$$-m\ddot{x} = -F_c + F_d + F_v + F_T + F_p \tag{16}$$

Dividing by mass m this differential equation is rewritten as

$$\ddot{x} + \eta\dot{x} - \eta a x^2 + \omega_c^2 x + \phi_c = 0 \tag{17}$$

in which

$$\omega_c^2 = \frac{k_v - k_c + Ak_p}{m} \tag{18}$$

where $k_c$ is the stiffness of the controlling closing spring, and

$$\phi_c = \frac{F_{v0} - F_{c0} + F_T + Ap_0}{m} \tag{19}$$

where $F_{c0}$ is the initial closing spring force. The initial conditions for the closing stroke for $t = 0$ are $x(0) =$ hand $\dot{x}(0) = 0$.

Now assuming that we have $n \geq 50$ measurements of the acceleration $\ddot{x}_i$ in successive points with time step $\Delta t$, we can recover the velocities $\dot{x}_i$ and positions $x_i$ following numerical integration by

$$\dot{x}_i = \dot{x}_{i-1} + \frac{\ddot{x}_i + \ddot{x}_{i+1}}{2}\Delta t \tag{20}$$

and

$$x_i = x_{i-1} + \frac{\dot{x}_i + \dot{x}_{i+1}}{2}\Delta t \tag{21}$$

With these numerical values equation 10 can be rewritten as a linear equation with respect to the parameters $\eta$, $\eta a$, $\omega_o^2$ and $\phi_o$.

$$\ddot{x}_i + \eta\dot{x}_i + \eta a x_i^2 + \omega_o^2 x_i + \phi_o = 0. \tag{22}$$

If write the above equation is written for any $i = 1,2,...,n$, then we will have an overdetermined linear system with respect to the above four parameters with a matrix

$$A = \left(a_{ij}\right)\begin{pmatrix} \dot{x}_1 & x_1^2 & x_1 & 1 \\ \dot{x}_2 & x_2^2 & x_2 & 1 \\ . & . & . & . \\ \dot{x}_n & x_n^2 & x_n & 1 \end{pmatrix} \tag{23}$$

and a right hand side vector

$$B = \left(b_{ij}\right) = \begin{pmatrix} -\ddot{x}_1 \\ -\ddot{x}_2 \\ . \\ -\ddot{x}_n \end{pmatrix}. \qquad (24)$$

The essence of the Least Squares Method (LST) is to minimise the sum of squares of residues of the equations of the system. The unknown parameters can be denoted as a vector $y = \left(\eta, \eta a, \omega_o^2, \phi_o\right)$. Then the procedure of the LSM is as follows.

Look for the vector y that minimises the function

$$F = \sum_{i=1}^{n}\left(\sum_{j=1}^{4} a_{ij}y_j - b_i\right)^2$$

$$(25)$$

Cancel of the derivatives of F with respect to any element of y

$$\frac{\partial F}{\partial y_k} = 2\sum_{i=1}^{n}\left(\sum_{j=1}^{4} a_{ij}y_j - b_i\right).\,a_{ik} = 0$$

$$(26)$$

which leads to the following system of linear algebraic equations

$$\sum_{j=1}^{4}\left(\sum_{i=1}^{n} a_{ij}a_{ik}\right)y_j = \sum_{i=1}^{n} a_{ik}b_i \quad, k = 1..4$$

$$(27)$$

A similar system of linear algebraic equations can be worked out for the closing period using equation 17. This system of linear algebraic equations can be solved, for example, by a C program to implement the Gauss Jordan Elimination Method.

In the beginning when the controlling head is just fixed on an arbitrary chosen valve the appropriateness of the method can be checked. The initial experiment has to be carried out with a stopped fluid. If the velocity of the fluid is 0 then the fluid velocity coefficient $a$ = 0 and the pressure force $F_p$ = 0.

For the opening stroke when the fluid is stopped the equation 10 becomes

$$\ddot{x} + \eta\dot{x} + \eta a_v x^2 + \omega_{vo}^2 x + \phi_{vo} = 0 \qquad (28)$$

where

$$\omega_{vo}^2 = \frac{k_o - k_v}{m}$$

$$(29)$$

$$\phi_{vo} = \frac{F_{opo} - F_{v0} + F_T}{m}$$

$$(30)$$

and where $a_v = 0$.

For the duration of $T_o$ the opening stroke the time step $\Delta t$ is chosen in such a way so that the number $n$ of acceleration data is

$$n = \frac{T_o}{\Delta t}$$

(31)

where $n \geq 50$.

The solution of equation 27 determines a vector $y_0 = (\eta, a_0, \omega_{vo}^2, \phi_{vo})$. If $\eta a_v \approx 0$ then the hydro-mechanical system consisting of controlling head and the chosen valve is appropriate for the investigation according to this method.

During the normal work of the valve for every opening stroke and every closed stroke the vector parameters $y = (\eta, \eta a, \omega_o^2, \phi_o)$ have to be calculated with the help of equation 27.

If the fluid velocity coefficient $a_v > 0$,

$$\Delta\omega_o^2 = \omega_o^2 - \omega_{vo}^2 > 0$$

(32)

and

$$\Delta\phi_o = \phi_o - \phi_{vo} > 0$$

(33)

then the valve is appropriate for investigation according to this method.

It is now possible to calculate the open valve steady state fluid velocity $v_{st}$, lumped mass m, static pressure $p_0$ and viscous coefficient $\beta$.

The steady state velocity $v_{st}$ fluid flowing thorough for the open valve can be calculated according to equation 8, substituting $x = h$:

$$v_{st} = ah^2.$$

(33)

The lumped mass can be calculated from the difference of $\phi_o$ and $\phi_{vo}$ using equations 13 and 22 which gives

$$\phi_o - \phi_{vo} = \frac{Ap_o}{m}$$

(34)

Rearranging equation 34 for the lumped mass m gives

$$m = \frac{Ap_o}{\phi_o - \phi_{vo}}$$

(35)

With equation 35 the lumped mass m can be calculated because the pressure $p_0$ can be measured and the area $A$ of the piston is known.

The difference of generalised forces is

$$\Delta\phi_{vo} = \frac{F_{op0} - F_{v0} + F_T - Ap_o}{m} - \frac{F_{op0} - F_{v0} + F_T}{m} = \frac{Ap_o}{m}$$

(36)

therefore, the initial static pressure of the system can be expressed as

$$p_0 = \frac{m\Delta\phi_{vo}}{A}$$

(37)

If the parameters of the valve performance are impaired, for instance if the friction forces in the valve have increased due to contamination, the magnitude of the friction force, particularly the parameter $\phi_o$, will increase.

The viscous coefficient $\beta$ can be estimated with the help of equation 12 according to the expression

$$\beta = \eta m.$$

(38)

The controlled parameters can be used for optimization and monitoring of the performance of the heating system, inspection of the valve and for the control of the heating system.

Embodiments of the present invention have been described with particular reference to the examples illustrated. However, it will be appreciated that variations and modifications may be made to the examples described within the scope of the appending claims.

The following numbered clauses on pages 39 to 44 of the present description correspond to the claims of European patent application no. 18726749.7 as filed. The claims of the present application as filed, which is divided from European patent application no. 18726749.7, can be found on the subsequent pages 45 to 47 of the specification which begin with the heading "CLAIMS".

**Clauses**

1. Apparatus for estimating the rate of one or more of the rate of fluid flow, the fluid pressure, and the fluid viscosity of a fluid, the apparatus comprising:

   a bistable device configured to be arranged in communication with a said fluid; and
   an accelerometer arranged to detect motion of the bistable device.

2. The apparatus of clause 1, wherein the bistable device is configured so that its motion can be affected by the fluid.

3. The apparatus of clause 1 or 2, wherein the bistable device is configured to be arranged in direct contact with the fluid.

4. The apparatus of any preceding clause, further comprising one or more force transfer members configured to transfer force between the bistable device and the fluid.

5. The apparatus of any preceding clause, wherein the bistable device is a valve.

6. The apparatus of any of clauses 1 to 4, wherein the bistable device is configured to actuate a valve.

7. The apparatus of clause 6, further comprising one or more force transfer members configured to transfer force between the bistable device and the valve.

8. The apparatus of any preceding clause, wherein the bistable device comprises:

   a rocker movable between a first stable state and a second stable state; and
   a resilient member configured to bias the rocker into each of the first and second stable states.

9. A method of estimating one or more of the rate of fluid flow, the fluid pressure, and the fluid viscosity of a fluid, the method comprising detecting motion of a bistable device;

   wherein the bistable device is in communication with a said fluid; and
   wherein motion is detected by an accelerometer.

10. The method of clause 9, wherein the bistable device is configured such that its motion can be affected by the fluid.

11. The method of clause 9 or 10, wherein the bistable device is configured to be arranged in direct contact with the fluid.

12. The method of any of clauses 9 to 11, further comprising one or more force transfer members configured to transfer force between the bistable device and the fluid.

13. The apparatus of any preceding clause, wherein the bistable device is a valve.

14. The method of any of clauses 9 to 12, wherein the bistable device is configured to actuate a valve.

15. The method of clause 14, further comprising one or more force transfer members are configured to transfer force between the bistable device and the valve.

16. The method of any of clauses 9 to 15, wherein the bistable device comprises:

a rocker movable between a first stable state and a second stable state; and
a resilient member configured to bias the rocker into each of the first and second stable states.

17. A device for actuating a valve, the device comprising:

a plurality of moveable components arranged in a bistable configuration;
wherein the plurality of moveable components comprises an articulated member comprising a plurality of segments.

18. The device of clause 17, further comprising one or more accelerometers coupled to one or more of the plurality of moveable components and configured to provide a signal indicative of fluid flow.

19. The device of clause 17 or 18, wherein the plurality of moveable components are moveable between a first stable state of the bistable configuration and a second stable state of the bistable configuration.

20. The device of any of clauses 17 to 19, wherein the plurality of moveable components comprises one or more resilient members.

21. The device of clause 20, wherein the one or more resilient members comprises one or more springs.

22. The device of any of clauses 17 to 21, wherein the plurality of segments comprises a rocker, an articulated arm and a lever.

23. The device of clause 22, wherein the articulated arm and lever are articulated at a fixed point.

24. The device of clause 22 or 23, wherein the articulated arm comprises an engagement point and the lever comprises a recess configured to receive the engagement point.

25. The device of any of clauses 20 to 24, wherein deformation of the one or more resilient members is determined by the configuration of the articulated member.

26. The device of any of clauses 17 to 25, further comprising one or more smart memory alloy (SMA) elements coupled to the articulated member, wherein each of the one or more SMA elements is actuatable to change between a first shape and a second shape.

27. The device of clause 26, wherein the SMA elements are configured such that changing between the first shape and the second shape provides a force for changing the configuration of the articulated member.

28. The device of any of clauses 17 to 27, wherein the device is configured to be coupled to a valve.

29. A device for actuating a valve, the device comprising:

a rocker movable between a first stable state and a second stable state;

an articulated arm with a first end coupled to the rocker and a second end having an engagement point;

a lever with a recess, the recess being configured to receive the engagement point of the articulated arm;

a spring coupled to and deformable by the lever;

one or more shape memory alloy (SMA) elements coupled to the rocker, actuatable to change between a first shape and a second shape;

wherein the rocker, articulated arm, lever, and spring are arranged so as to require a predetermined force to move the rocker from one stable state to the other;

wherein actuation of one of the one or more SMA elements to change from one of the first shape and the second shape to the other of the first shape and the second shape provides the said predetermined force for actuating a valve between a closed position and an open position.

30. The device according to clause 29, wherein the rocker moves through an unstable state of equilibrium as it moves from one stable state to the other; and wherein the predetermined force is a force required move the rocker beyond the unstable state of equilibrium.

31. The device according to clause 29 or 30, wherein the rocker, articulated arm, lever, and spring are arranged so as to impose a first predetermined force required to move the rocker from the first stable state to the second stable state and a second predetermined force required to move the rocker from the second stable state to the first stable state.

32. The device according to any of clauses 29 to 31, further comprising a chassis, wherein the chassis comprises:

a base to which the rocker is pivotally coupled and to which one end of the spring is adjustably coupled;

an upper section having one or more adjustable holders to which the respective one or more SMA elements are additionally coupled; and

a support section having an anchor point, wherein one end of the lever is pivotally coupled to the anchor point and another end of the lever is coupled to another end of the spring.

33. The device according to clause 32, wherein the one or more adjustable holders are arranged to enable adjustment of the tension in the respective one or more SMA elements.

34. The device according to clause 32 or 33, wherein the one end of the spring is adjustably coupled to the base so as to enable adjustment of the tension in the spring.

35. The device according to any of clauses 32 to 34, wherein the base of the chassis further comprises one or more stoppers of adjustable height to constrain the rotational motion of the rocker.

36. The device according to any of clauses 29 to 35, wherein the one or more SMA elements are actuatable to change from one of the first shape and the second shape to the other of the first shape and the second shape in response to applied stress.

37. The device according to any of clauses 29 to 35, wherein the one or more SMA elements are actuatable to change from one of the first shape and the second shape to the other of the first shape and the second shape in response to being heated above a critical temperature.

38. The device according to any of clauses 29 to 37, further comprising an electric circuit configured to apply current to the one or more SMA elements; wherein the one or more SMA elements are configured to be heated by electrical resistance heating.

39. The device according to clause 38, further comprising a thermoelectric generator configured to power the electric circuit.

40. The device according to clause 39, wherein the thermoelectric generator is configured to supply the electric circuit with electrical energy converted from ambient thermal energy.

41. The device according to any of clauses 29 to 40, further comprising an indicator coupled to the rocker to indicate whether the rocker is in the first stable state or the second stable state.

42. The device according to any of clauses 29 to 41, further comprising:

a roller rotatably mounted to the rocker; and
a follower arranged to engage the roller;
wherein the roller is arranged to engage the follower so as to transfer movement of the rocker to the follower.

**Claims**

1. An actuator comprising:

a plurality of moveable components arranged in a bistable configuration;
wherein the plurality of moveable components comprises an articulated member comprising a plurality of segments.

2. The actuator of claim 1, further comprising one or more accelerometers coupled to one or more of the plurality of moveable components and configured to provide a signal indicative of fluid flow when used to actuate a valve.

3. The actuator of claim 1 or 2, wherein the plurality of moveable components are moveable between a first stable state of the bistable configuration and a second stable state of the bistable configuration.

4. The actuator of any of claims 1 to 3, wherein the plurality of moveable components comprises one or more resilient members.

5. The actuator of claim 4, wherein the one or more resilient members comprises one or more springs.

6. The actuator of any of claims 1 to 5, wherein the plurality of segments comprises a rocker, an articulated arm and a lever.

7. The actuator of claim 6, wherein the articulated arm and lever are articulated at a fixed point and/or wherein the articulated arm comprises an engagement point and the lever comprises a recess configured to receive the engagement point.

8. The actuator of any of claims 4 to 7, wherein deformation of the one or more resilient members is determined by the configuration of the articulated member.

9. The actuator of any of claims 1 to 8, further comprising one or more smart memory alloy (SMA) elements coupled to the articulated member, wherein each of the one or more SMA elements is actuatable to change between a first shape and a second shape.

10. The actuator of claim 9, wherein the SMA elements are configured such that changing between the first shape and the second shape provides a force for changing the configuration of the articulated member.

11. The actuator of any of claims 1 to 10, wherein the device is configured to be coupled to a valve.

12. An actuator comprising:

a rocker movable between a first stable state and a second stable state;
an articulated arm with a first end coupled to the rocker and a second end having an engagement point;
a lever with a recess, the recess being configured to receive the engagement point of the articulated arm;
a spring coupled to and deformable by the lever;
one or more shape memory alloy (SMA) elements coupled to the rocker, actuatable to change between a first shape and a second shape;
wherein the rocker, articulated arm, lever, and spring are arranged so as to require a predetermined force to move the rocker from one stable state to the other;
wherein actuation of one of the one or more SMA elements to change from one of the first shape and the second shape to the other of the first shape and the second shape provides the said predetermined force..

13. The actuator according to claim 12, wherein the rocker moves through an unstable state of equilibrium as it moves from one stable state to the other; and wherein the predetermined force is a force required move the rocker beyond the unstable state of equilibrium.

14. The device according to claim 12 or 13, wherein the rocker, articulated arm, lever, and spring are arranged so as to impose a first predetermined force required to move the rocker from the first stable state to the second stable state and a second predetermined force required to move the rocker from the second stable state to the first stable state.

15. The actuator according to any of claims 12 to 14, wherein the one or more SMA elements are actuatable to change from one of the first shape and the second shape to the other of the first shape and the second shape in response to being heated above a critical temperature and optionally, further comprising an electric circuit configured to apply current to the one or more SMA elements; wherein the one or more SMA elements are configured to be heated by electrical resistance heating.

Figure 1

Figure 2

Figure 3

Figure 4

Figure 5

Figure 6

Figure 7a

Figure 7b

Figure 8

Figure 9

**REFERENCES CITED IN THE DESCRIPTION**

**Patent documents cited in the description**

- US 4973024 A
- US 7620932 B
- US 6464200 B
- US 6412352 B
- US 20160146649 A
- EP 18726749